# EUROPÄISCHE PATENTSCHRIFT

(11) **EP 0 660 492 B1**
(45) Veröffentlichungstag und Bekanntmachung des Hinweises auf die Patenterteilung: **03.09.1997**
(21) Anmeldenummer: 94890196.2
(22) Anmeldetag: 28.11.1994
(51) Int. Cl.: H02K 9/19, H02K 9/193, F16H 57/04, H02K 7/116

(54) **Kühlsystem für einen Motor**
Cooling system for a motor
Système de refroidissement d'un moteur

(30) Priorität: 23.12.1993 AT 2610/93
(43) Veröffentlichungstag der Anmeldung: 28.06.1995
(73) Patentinhaber: ABB Daimler Benz Transportation Austria GmbH, 2351 Wiener Neudorf (AT)
(72) Erfinder: Neudorfer, Harald, A-2351 Wiener Neudorf (AT)
(74) Vertreter: Köhler-Pavlik, Johann, Dipl.-Ing.

(56) Entgegenhaltungen:
- WO-A-90/09053
- GB-A- P16 986
- GB-A- 851 971
- GB-A- 1 019 804
- GB-A- 2 032 703
- US-A- 4 418 777

## Beschreibung

Die Erfindung betrifft ein Kühlsystem für einen Elektromotor nach dem Oberbegriff des Patentanspruchs 1.

Bei bekannten Motoren ist meist nur der Stator von einem Kühlmantel mit mäanderförmig verlaufendem Kanal umschlossen, welcher von einem Kühlmittel (Wasser-Glykol, Öl oder ähnlichem) durchströmt wird. Der Nachteil dieser Kühlung besteht bei einem Motor, insbesondere Kurzschlußläufer darin, daß die Wärme der Motorwelle und ihrer Lagerung nur über Umwege über das Blechpaket an den Statorkühlmantel abgeleitet werden kann. Dies hat zur Folge, daß die Lagertemperatur, vor allem im Innenring, sehr stark ansteigt, weil die Verluste in den leitfähigen Rotorteilen (Kupferwicklung) und die Eisenverluste, nicht genügend rasch abgeführt werden können.

Die GB-A-2 032 703 zeigt ein Kühlung im Inneren eines rotierenden Gehäuses, welche aber nicht den speziellen Aufbau der gegenständlichen Erfindung zeigt, sondern feststehend an einem feststehenden Teil im Inneren des rotierenden Gehäuses montiert ist. Insbesondere handelt es sich dabei um keine Wellenkühlung. Weiters ist als Kühlmedium Wasser oder eine andere Flüssigkeit erwähnt und nicht die erfindungsgemäße Verwendung des Getriebeöls als Kühlmedium.

Die GB-A-P16986 beschreibt die Rotorkühlung einer elektrischen Maschine mit Wasser als Kühlmedium, welches durch eine feststehende Düse in einem hohle Rotorwelle eingebracht und durch einen Kranz von axialparallelen Bohrungen außen an der Rotorwelle wieder zurückgeführt. Die Düse ist mit einer schleifenden Dichtung in einem Wellenabschnitt eingesetzt und die Rückführungsbohrungen münden hinter der Dichtung der Düse in den ringförmigen Hohlraum im besagten Wellenabschnitt um die Düse.

Es bestehen daher bereits Vorschläge für eine Wellenkühlung, die jedoch nicht befriedigend waren. Aus der WO 90/09053 oder der US-PS 5 053 661 ist beispielsweise die hohle Ausführung der Rotorwelle und ein darin eingesetztes, koaxiales Rohr zur Führung eines externen Kühlmediums bei Einbringung und Austragung des Kühlmediums auf der selben Seite der Welle bekannt.

Die Verwendung von Getriebeöl als Kühlmittel ist aus der US-A-4 418 777 bekannt. Dabei wird das Öl über eine Pumpe angesaugt und in einen ringförmigen axialen Hohlraum in der Rotorwelle geleitet sowie von dort durch radiale Bohrungen entlang der Welle nach außen geschleudert. wodurch das Öl auch in axialparallele Passagen im Rotorblechpaket gelangt. Hieraus wird kein Aufbau nahegelegt, bei dem wie bei der gegenständlichen Erfindung das Kühlmittel auf der gleichen Seite ein- und austritt, die Rotorwelle mit einem eingesetzten Rohr versehen ist und somit das Kühlmittel innerhalb der Welle in beide Richtungen geführt ist.

Die GB-A-851 971 beschreibt eine Kühlung eines Motors mit Öl, wobei der Stator über spiralförmige Nuten an der inneren Oberfläche vom Kühlmedium durchflossen wird und zur Kühlung des Rotors das Öl über ein feststehendes Rohr in die hohle Rotorwelle gepumpt wird. In diesem Vorhalt wird kein mitrotierendes Innenrohr in der Rotorwelle, in welches über eine feststehende Düse das Kühlmedium eingebracht wird, verwendet.

Aufgabe der Erfindung ist die Schaffung eines Kühlsystems, durch welches eine Wellenkühlung geschaffen wird, welche eine hohe Auswertung der Maschine ermöglicht und auch für gekapselte Motore angewendet werden kann, welche den Vorteil haben, daß sie geräuscharm sind.

Diese Aufgabe wird erfindungsgemäß durch die kennzeichnenden Merkmale des Patentanspruchs 1 gelöst. Damit ist einerseits das bereits vorhandene Getriebeöl in einfacher Weise auch zur Kühlung der Motorwelle verwendbar und es müssen keine zusätzlichen Kühleinrichtung, Leitung, Pumpen od. dgl. für externe Kühlmedien vorgesehen sein. Der Motor ist dadurch leistungsfähiger und trotzdem leicht.

Gemäß einem weiteren Merkmal der Erfindung ist beispielsweise ein Kleinrad des im Getriebekasten untergebrachten Getriebes am antriebsseitigen Ende der Rotorwelle in diese eingesetzt und besitzt einen Kanal in Fortsetzung eines Rohres im Inneren der hohlen Rotorwelle. Damit ist ein besonders einfacher Aufbau bei Gewährleistung der guten Wellenkühlung des Motors gegeben.

Dabei ist vorteilhafterweise vorgesehen, daß um den in die Rotorwelle eingesetzten Teil des Kleinrades eine Anzahl von Kanälen im antriebsseitigen Teil der Rotorwelle vorgesehen ist, welche Kanäle einerseits in den Hohlraum der Rotorwelle und andererseits in den Ölraum des Getriebekastens münden.

Gemäß einem weiteren Merkmal der Erfindung ist das Rohr im Hohlraum der Rotorwelle durch Abstandhalter abgestützt.

Weitere Vorteile und Merkmale der Erfindung werden anhand der Zeichnung näher erläutert, in welcher ein Ausführungsbeispiel des Kühlsystemes dargestellt ist.

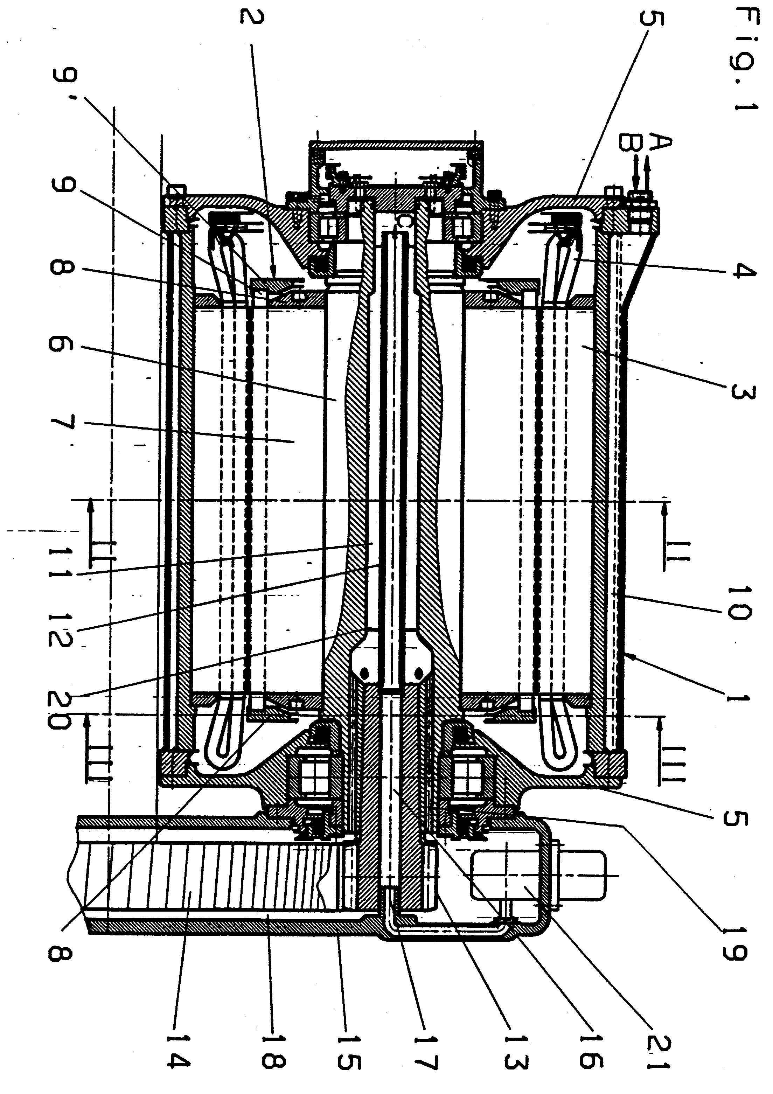

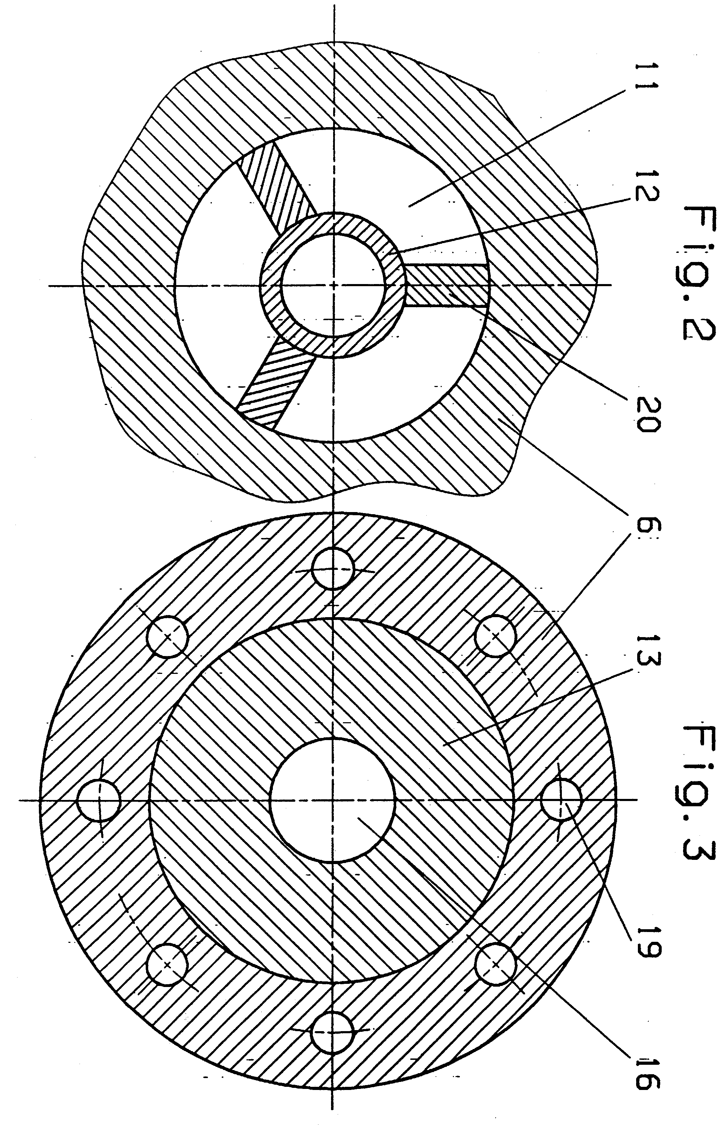

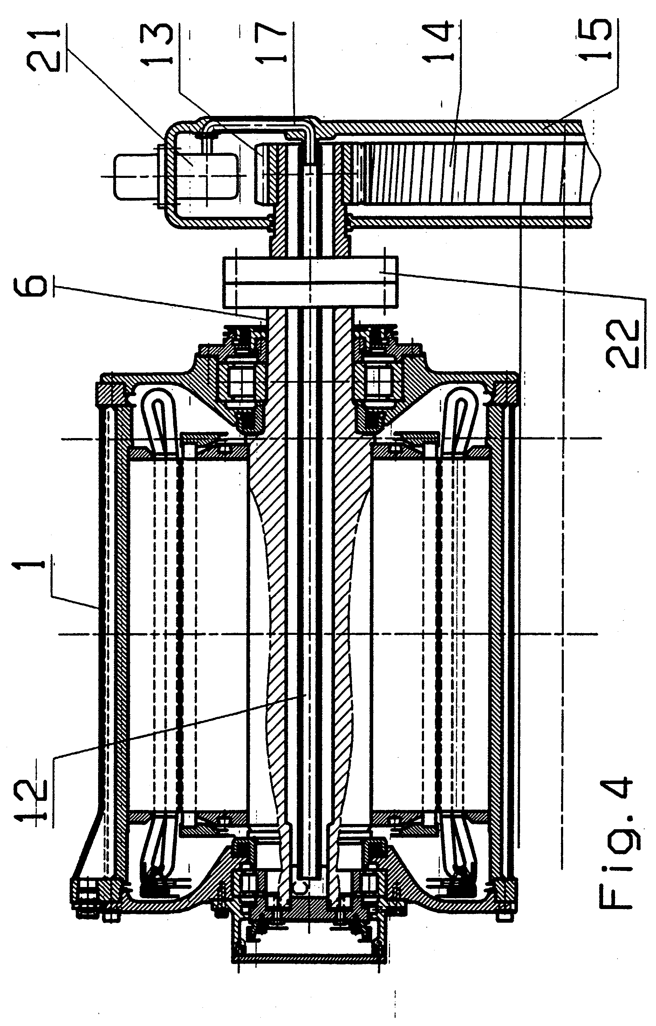

Es zeigen Fig. 1 einen Querschnitt des Traktionsmotors, Fig. 2 einen Schnitt nach der Linie II-II der Fig. 1, Fig. 3 einen Schnitt nach der Linie III-III der Fig. 1 und Fig. 4 eine weitere Ausführungsform des Kühlsystems.

Der Motor besteht aus einem feststehenden Teil, dem Ständer oder Stator 1 und einem umlaufenden Teil, dem Läufer 2 oder Rotor. Auf einem inneren Kreisumfang des Stators 1 sind in Nuten eines Statoreisenblechpaketes 3 eine Statorwicklung 4 eingebettet.

Der Läufer 2 besitzt eine in Lagerschildern 5 gelagerte Rotorwelle 6, auf welcher ein Eisenblechpaket 7 durch Preßringe 8 zusammengespannt ist, von welchen je einer zu beiden Seiten des Blechpaketes auf der Welle 6 festgehalten ist. In Umfangsnuten des Eisenblechpaketes 7, welche in Winkelabständen verlaufen, sind leitende Rotorstäbe 9 eingefügt, deren Enden zu beiden Seiten des Rotors durch Kurzschlußringe 9' miteinander leitend verbunden sind.

Der Stator 1 ist von einem Kühlmantel 10 umschlossen, welcher einen spiralförmigen oder mäanderförmigen Durchflußkanal besitzt und von einem Wasser-Glykol-Gemisch durchflossen ist. Die Pfeile A, B deuten den Ein- bzw. Austritt des Gemisches an. Selbstverständlich können im Rahmen der Erfindung im Stator andere Kühlsysteme angewendet werden. So ist beispielsweise eine Rippenkühlung möglich.

Auf der Rotorwelle 6 sitzt am antriebsseitigen Ende ein in dieses eingesetzte, von der Rotorwelle 6 mitgenommenes Ritzel bzw. Kleinrad 13, welches ein Großrad 14 antreibt, das die Antriebsachse der Lokomotive mitnimmt. Das Kleinrad 13 und das Großrad 14 sind von einem Getriebekasten 15 umschlossen, welcher zum Unterschied von der Darstellung auch doppelmantelig ausgebildet sein kann.

Die Rotorwelle 6 ist hohl und bildet einen axialen Hohlraum 11, in welchen ein Rohr 12 axial eingesetzt und darin, wie Fig. 2 zeigt, durch vorzugsweise drei in gleichen Winkelabständen angeordnete Abstandhalter 20 abgestützt ist. Das Rohr 12 schließt am antriebsseitigen Ende der Rotorwelle 6 an einen axialen Hohlraum 16 des Kleinrades 13 an, welcher über eine Düse 17 in den Ölraum 18 des Getriebekastens 15 mündet. Das Rohr 12 ist vom Hohlraum 11 der Rotorwelle 6 umschlossen, welcher an seinem dem Kleinrad 13 abgekehrten Ende mit dem Rohr 12 kommuniziert und am anderen Ende über Kanäle 19 in den Ölraum 18 des Getriebekastens 15 mündet. Im vorliegenden Falle sind beispielsweise, wie aus Fig. 3 ersichtlich ist, am antriebsseitigen Ende der Rotorwelle 6 acht in gleichen Winkelabständen angeordnete Kanäle 19 vorgesehen, welche sich, wie Fig. 1 zeigt, entlang des in die Rotorwelle 6 eingesetzten Teiles des Kleinrades 13 erstrecken.

Erfindungsgemäß wird das Getriebeöl aus dem Getriebekasten 15 mittels einer Pumpe 21 über die Düse 17 in das Rohr 12 axial eingespritzt und am Ende desselben, wie mit Pfeil C angedeutet ist, in den Hohlraum 11 umgelenkt, aus welchem es über die Kanäle 19 in den Ölraum 18 des Getriebekastens 15 zurückfließt.

Selbstverständlich können im Rahmen der Erfindung verschiedene konstruktive Änderungen vorgenommen werden. So besteht die Möglichkeit, bei einer doppelmanteligen Ausbildung des Gehäuses des Getriebekastens 15 und der dadurch besseren Rückkühlung der Getriebeöle in den Innenraum die Kühlflüssigkeit aus dem Kühlraum des Stators einzuleiten und durch die Strömungskraft beispielsweise eine Turbine anzutreiben, welche ihrerseits wiederum die Ölpumpe 21 antreibt. Weiters besteht die Möglichkeit, im Rohr 12 eine Spirale vorzusehen, sodaß der Durchflußkanal spiralförmig wird, wodurch die Drehung der Rotorwelle eine Saugwirkung bewirken würde, durch welche das Öl in das Rohr 12 aus dem Ölsumpf über ein Rohr, welches die Düse 17 ersetzt, angesaugt wird. In diesem Fall könnte die Pumpe 21 entfallen. Diese Möglichkeit ist besonders bei Einrichtungsfahrzeugen zur Einsparung oder geringeren Dimensionierung der Ölpumpe 21 vorteilhaft.

Schließlich ist eine Ausführungsform nach Fig. 4 möglich, bei welcher eine Verlängerung der Rotorwelle 6 in den Getriebekasten 15 durch eine Kupplung 22 führt, wobei die Verlängerung durchbohrt ist und das Getriebeöl durch die Bohrung in das Rohr 12 gelangen kann.

## Patentansprüche

1. Kühlsystem für einen Elektromotor mit Getriebekasten (15), einer flüssigkeits- innengekühlten, hohlen Rotorwelle (6) mit einem koaxialen mitrotierenden Innenrohr (12) und einem außen gekühlten Stator (1), insbesondere für einen Traktionsmotor, dadurch gekennzeichnet, daß ein die Rotorwelle (6) und den Getriebekasten verbindendes Kanalsystem (16, 17, 19) zur axialen Einbringung von Getriebeöl aus dem Ölraum (18) des Getriebekastens (15) als Kühlmittel in das Innenrohr (12) der Rotorwelle (6) an einem Ende dieser Welle (6) und zur axialen Entnahme und Rückleitung des Getriebeöls aus dem Ringspalt zwischen Innenrohr (12) und Innenwandung der Rotorwelle vom selben Ende der Rotorwelle (6) zurück in den Getriebekasten (15) vorgesehen ist.

2. Kühlsystem nach Anspruch 1, dadurch gekennzeichnet, daß ein Kleinrad (13) des im Getriebekasten (15) untergebrachten Getriebes (13, 14) am antriebsseitigen Ende der Rotorwelle (6) in diese eingesetzt ist und einen Kanal (16) in Fortsetzung eines an sich bekannten Rohres (12) im Inneren der hohlen Rotorwelle (6) besitzt.

3. Kühlsystem nach Anspruch 2, dadurch gekennzeichnet, daß um den in die Rotorwelle (6) eingesetzten Teil des Kleinrades (13) eine Anzahl von Kanälen (19) im antriebsseitigen Teil der Rotorwelle (6) vorgesehen ist, welche Kanäle (19) einerseits in den Hohlraum (11) der Rotorwelle (6) und andererseits in den Ölraum (18) des Getriebekastens (15) münden.

4. Kühlsystem nach Anspruch 2, dadurch gekennzeichnet, daß das Rohr (12) im Hohlraum (11) der Rotorwelle (6) durch Abstandhalter (20) abgestützt ist.

## Claims

1. Cooling system for an electric motor with a gearbox (15), an internally liquid cooled, hollow rotor shaft (6) with a coaxial, jointly rotating inner pipe (12) and an externally cooled stator (1), particularly for a traction motor, characterized in that a duct system (16, 17, 19) linking the rotor shaft (6) and the gearbox is provided for the axial introduction of gear oil from the oil chamber (18) of the gearbox (15) as coolant into the inner pipe (12) of the rotor shaft (6) at one end of said shaft (6) and for the axial removal and return of the gear oil from the annular clearance between the inner pipe (12) and the inner wall of the rotor shaft from the same end of said rotor shaft (6) back into the gearbox (15).

2. Cooling system according to claim 1, characterized in that a small wheel (13) of the gear (13, 14) housed in the gearbox (15) is inserted in the rotor shaft (6) at the drive-side end thereof and has a duct (16) in the extension of a per se known pipe (12) in the interior of the hollow rotor shaft (6).

3. Cooling system according to claim 2, characterized in that around the part of the small wheel (13) inserted in the rotor shaft (6) is provided a plurality of ducts (19) in the drive-side part of the rotor shaft (6), said ducts (19) issuing on the one hand into the cavity (11) of the rotor shaft (6) and on the other into the oil chamber (18) of the gearbox (15).

4. Cooling system according to claim 2, characterized in that the pipe (12) is supported in the cavity (11) of the rotor shaft (6) by spacers (20).

## Revendications

1. Système de refroidissement pour un moteur électrique comprenant une boîte d'engrenages (15), un arbre creux (6), refroidi à l'intérieur par liquide, un tube interne (12) coaxial, qui l'entraîne en rotation et un stator (1), refroidi à l'extérieur, en particulier pour un moteur à traction, caractérisé en ce q'un système de canaux (16, 17, 19), reliant l'arbre de rotor (6) et la bôite d'engrenages est prévu pour l'introduction axiale de l'huile à engrenages provenant de la chambre d'huile (18) de la boîte d'engrenages (15) en tant que réfrigérant vers l'intérieur du tube interne (12) de l'arbre de rotor (6), à une extrémité de cet arbre (6) et pour le prélevement axial et le renvoi de l'huile à engrenages sortant par la fente annulaire entre le tube interne (12) et la paroi interne de l'arbre de rotor depuis la même extrémité de l'arbre de rotor (6) afin de revenir dans la bôite d'engrenages (15).

2. Système de refroidissement selon la revendication 1, caractérisé en ce qu'une petite roue (13) de l'engrenage (13, 14), logé dans la boîte d'engrenages (15), est insérée dans l'arbre de rotor (6), à son extrémité, côté entraînement, et présente un canal (16) dans le prolongement d'un tube (12) connu en soi à l'intérieur de l'arbre creux de rotor (6).

3. Système de refroidissement selon la revendication 2, caractérisé en ce qu'il est prévu, autour de la partie de la petite roue (13), insérée dans l'arbre de rotor (6), un nombre de canaux (19), disposés dans la partie côté entraînement de l'arbre de rotor (6), canaux (19) qui débouchent, d'une part, dans l'espace creux (11) de l'arbre de rotor (6) et, d'autre part, dans la chambre à huile (18) de la boîte d'engrenages (15).

4. Système de refroidissement selon la revendication 2, caractérisé en ce que le tube (12) prend appui dans l'expace creux (11) de l'arbre de rotor (6) par l'intermédiaire d'écarteurs (20).
